Europäisches Patentamt

European Patent Office

Office européen des brevets

(11) Numéro de publication: **0 362 767**
**A1**

## (12) DEMANDE DE BREVET EUROPEEN

(21) Numéro de dépôt: 89118234.7

(22) Date de dépôt: 02.10.89

(51) Int. Cl.5: **G02B 23/24 , A61B 1/00**

(30) Priorité: 06.10.88 CH 3743/88
10.10.88 FR 8813401

(43) Date de publication de la demande:
**11.04.90 Bulletin 90/15**

(84) Etats contractants désignés:
**AT BE DE GB IT LU NL SE**

(71) Demandeur: **LASAG AG**
**Mittlere Strasse 52**
**CH-3600 Thun(CH)**

(72) Inventeur: **Pascal, Rol**
**Grossplatzstrasse 9**
**CH-8122 Pfaffhausen(CH)**

(74) Mandataire: **Caron, Gérard et al**
**ICB Ingénieurs Conseils en Brevets SA**
**Passage Max. Meuron 6**
**CH-2001 Neuchâtel(CH)**

(54) **Dispositif catadioptrique monolithique.**

(57) L'invention concerne un dispositif catadioptrique destiné à devier un faisceau lumineux d'un angle prédéterminé le long d'un axe optique brisé, puis à focaliser ce faisceau sur un plan-image prédéterminé.

Le but de l'invention est de réaliser un dispositif de faible dimension, utilisable avec des faisceaux de haute énergie.

Ce but est atteint à l'aide d'un dispositif catadioptrique réalisé sous forme d'un unique corps monolithique en matière optique, ce corps de forme hémisphérique définissant deux surfaces convergentes ($S_1$, $S_3$) de focalisation du faisceau et une surface ($S_2$) à réflexion totale.

Ces surfaces convergentes ($S_1$, $S_3$) sont placées sur le trajet optique de part et d'autre de la surface à réflexion totale ($S_2$).

L'invention trouve une application particulière dans le domaine médical, notamment dans les endoscopes et les lasers.

FIG. 4

# DISPOSITIF CATADIOPTRIQUE MONOLITHIQUE

La présente invention concerne un dispositif catadioptrique capable de provoquer une déflexion d'un angle prédéterminé et une focalisation d'un faisceau lumineux, le long d'un trajet optique à axe brisé.

Les dispositifs de ce genre que l'on connaît actuellement permettent d'irradier des emplacements difficilement accessibles dans un but d'observation ou de traitement. Ils sont utilisés dans le domaine médical, notamment pour des opérations d'endoscopie. Ils se prêtent aussi à des applications thérapeutiques, par exemple pour le traitement de points précis de l'oeil. Dans les applications thérapeutiques, le faisceau lumineux qui traverse le dispositif est souvent un faisceau de lumière cohérente de grande puissance de sorte que l'emploi de colle ou de matériaux légèrement absorbants est exclu.

Des dispositifs du genre spécifié sont aussi utilisés dans des applications industrielles, par exemple pour l'observation ou le traitement de surfaces internes de tubes ou de cavités.

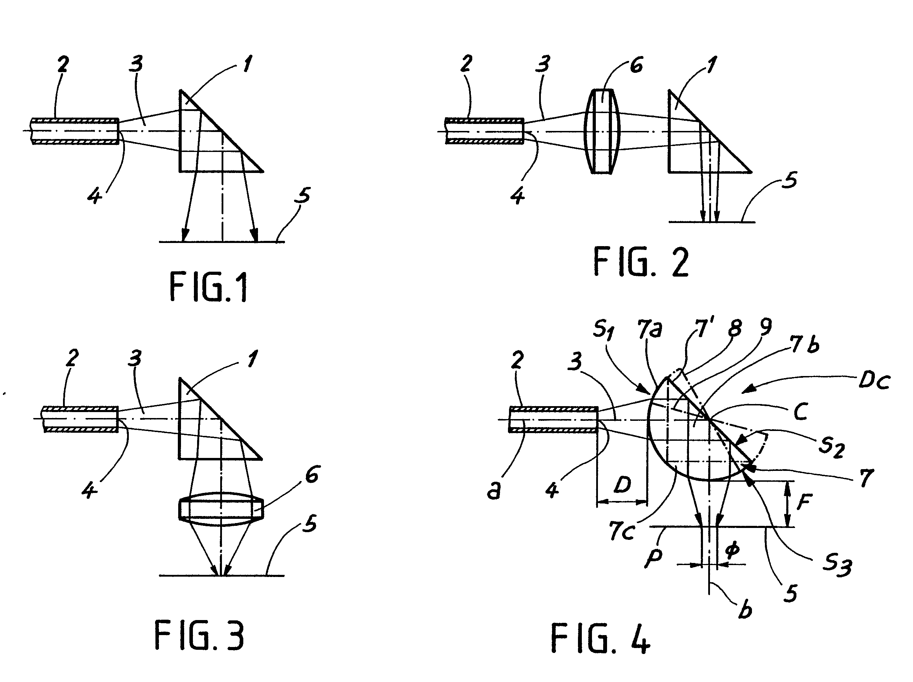

Les figures 1, 2 et 3 du dessin annexé sont des représentations schématiques de dispositifs catadioptriques de l'art antérieur et permettent d'expliquer le problème que l'on rencontre dans les applications indiquées.

La figure 1 représente un prisme droit 1, en matière optique transparente, fixé en regard d'une extrémité d'un conducteur optique 2, cette extrémité constituant pour le prisme une source lumineuse. Un tel dispositif présente un nombre minimum de surfaces optiques et remplit bien la fonction déflectrice, mais ne présente aucune fonction de refocalisation. Le faisceau 3 est divergent à partir de l'extrémité 4 du conducteur 2 de sorte que la surface irradiée 5 est relativement grande. Ceci constitue un inconvénient grave dans les applications thérapeutiques ou de traitement de surface où une grande densité de puissance est nécessaire.

Les figures 2 et 3 montrent des dispositifs du même genre que celui de la figure 1 mais dans lesquels une lentille biconvexe 6 est associée au prisme 1. Ces dispositifs ont à la fois une fonction déflectrice et une fonction de refocalisation, mais ils ont l'inconvénient de présenter au moins quatre surfaces optiques, qui entraînent un échauffement et une perte de l'énergie utilisable. En outre, dans le cas où la lentille 6 est placée entre le conducteur optique 2 et le prisme 1 (figure 2), il est difficile d'obtenir une concentration appropriée du faisceau dans le plan image 5 car la distance entre la lentille 6 et ce plan 5 ne peut pas être raccourcie autant qu'il serait souhaitable.

Dans le cas où la lentille 6 est placée en aval du prisme 1 (figure 3), la refocalisation est facilitée mais la dimension latérale du système par rapport à l'axe optique d'entrée est importante. Or, ceci est gênant notamment pour les applications en endoscopie.

On connaît également d'après le brevet US-A-4 140 364, un dispositif utilisant un prisme sur les faces latérales duquel sont collées des lentilles convergentes. Ce type de dispositif est malheureusement inutilisable avec un faisceau laser de haute énergie, d'une part, en raison des pertes d'énergie à l'interface entre le prisme et les lentilles et d'autre part, en raison des risques de décollement des différentes parties.

On retrouve le même inconvénient dans le dispositif décrit dans le brevet GB-A-015 675, car ce dispositif comprend également deux éléments accolés dont l'interface provoque des pertes d'énergie considérables si on le fait traverser par un faisceau laser de haute énergie. Dans ce cas, le dispositif est composite pour améliorer les propriétés optiques proprement dites.

La présente invention a pour but de créer un dispositif du genre indiqué au début, qui élimine les défauts et les insuffisances des dispositifs connus, et qui puisse être utilisé notamment avec des faisceaux de haute énergie.

L'invention a donc pour objet un dispositif catadioptrique destiné à dévier un faisceau lumineux d'un angle prédéterminé le long d'un axe optique brisé, et à focaliser ce faisceau optique sur un plan-image prédéterminé, ce dispositif comportant des moyens définissant une surface optique plane de réflexion totale dont un point coïncide avec le point d'inflexion dudit axe et des moyens définissant des surfaces optiques convergentes de focalisation dudit faisceau, ces surfaces étant placées sur ledit trajet optique, respectivement de part et d'autre de ladite surface à réflexion totale, caractérisé en ce que ladite surface à réflexion totale et les surfaces convergentes sont ménagées sur un corps d'une seule pièce, réalisé en une matière optique.

On va décrire ci-après en se référant aux dessins annexés, plusieurs exemples de réalisation non limitatifs de l'invention.

- les figures 1, 2 et 3, déjà décrites sont des exemples de l'art antérieur,

- la figure 4 est une vue analogue aux figures 1, 2 et 3 montrant la forme d'exécution préférée du dispositif catadioptrique, objet de l'invention,

- les figures 5, 6 et 7 sont des vues respectivement en plan, en coupe axiale et en élévation frontale du dispositif de la figure 4,

- la figure 8 est un graphique illustrant les performances du dispositif.

Le dispositif catadioptrique DC représenté schématiquement à la figure 4, est irradié par un conducteur optique 2 qui peut être constitué d'une seule fibre optique ou d'un faisceau de fibres optiques conduisant de la lumière cohérente ou non-cohérente. Bien entendu, selon les besoins d'autres sources lumineuses peuvent être utilisées. Le dispositif DC comporte un corps 7 qui est monté fixe en regard de l'extrémité 4 du conducteur 2, grâce à une monture appropriée qui n'est pas représentée sur cette figure. Le corps 7 est monolithique c'est-à-dire d'une seule pièce en matériau optique transparent, par exemple en saphir, ayant ici la forme d'une demi-sphère. Du point de vue des fonctions optiques, le corps 7 comporte une zone d'entrée 7a jouant le rôle d'une lentille plan-convexe convergent, une zone centrale 7b jouant le rôle de prisme et une zone de sortie 7c jouant le rôle d'une lentille plan-convexe de focalisation.

Le faisceau lumineux 3 sortant de l'extrémité 4 du conducteur 2 est divergent. Il se réfracte sur la surface S1 de la zone 7a puis subit une réflexion totale sur la surface plane S2 de la zone 7b et se réfracte à nouveau sur la surface S3 de la zone 7c pour sortir sous forme d'un faisceau convergent atteignant le plan-image 5. Les portions de surface sphérique qui délimitent les zones 7a et 7c sont ainsi placées de part et d'autre de la surface 7b à réflexion totale le long de l'axe optique brisé a-b selon lequel se propage le faisceau lumineux. On voit également que le point d'inflexion c de cet axe brisé est situé dans le plan de la surface à réflexion totale 7b.

On pourrait également prévoir d'autres variantes de réalisation dans lesquelles les surfaces convergentes S1 et S3 ne seraient plus sphériques, mais coniques, hyperboloïdes, paraboloïdes ou ellipsoïdes.

En outre, on pourrait aussi prévoir de réaliser un corps 7 monolithique, mais ne présentant pas de zone d'entrée 7a jouant le rôle de lentille plan-convexe. En d'autres termes ce corps ne comprendrait que le zone centrale 7b jouant le rôle de prisme et la zone de sortie 7c de focalisation.

Il résulte de cette disposition une forme extrêmement ramassée de l'ensemble optique défini par le corps 7 dont les surfaces optiquement actives se trouvent à des distances minimales les unes des autres. Comparé à l'encombrement des dispositifs antérieurs, celui du dispositif catadioptrique de l'invention est donc extrêmement réduit, ce qui le rend particulièrement utilisable dans des applications médicales telles que l'endoscopie et les traitements au laser.

Dans la disposition représentée en traits pleins à la figure 4, les deux tronçons a et b de l'axe brisé sont perpendiculaires, mais il suffit de modifier la position angulaire du corps 7 par rapport au conducteur 2 pour obtenir un autre angle entre ces tronçons c'est-à-dire un angle de déflexion différent de 90°. Les limites du débattement angulaire possible du corps 7 par rapport à l'axe du faisceau d'entrée dépendent de indice de réfraction (n) du matériau utilisé. Avec le saphir (n = 1,76) un débattement de ± 20° du faisceau lumineux est facilement possible. Pour l'augmenter, on pourrait prévoir de réaliser le corps 7 en un matériau ayant un indice de réfraction plus élevé par exemple en diamant (n = 2,4). La limite de l'inclinaison de la surface réfléchissante par rapport au tronçon a de l'axe dépend du phénomène de réflexion totale qui doit se produire sur cette surface. On pourrait aussi prévoir sur la face plane du corps 7 un revêtement 7' capable de réfléchir la lumière quel que soit son angle d'incidence, mais la réflexion est alors accompagnée d'une perte d'énergie par absorption. A la figure 4, les positions angulaires limites de la face plane de la zone 7b sont indiquées par les lignes en traits mixtes 8 et 9.

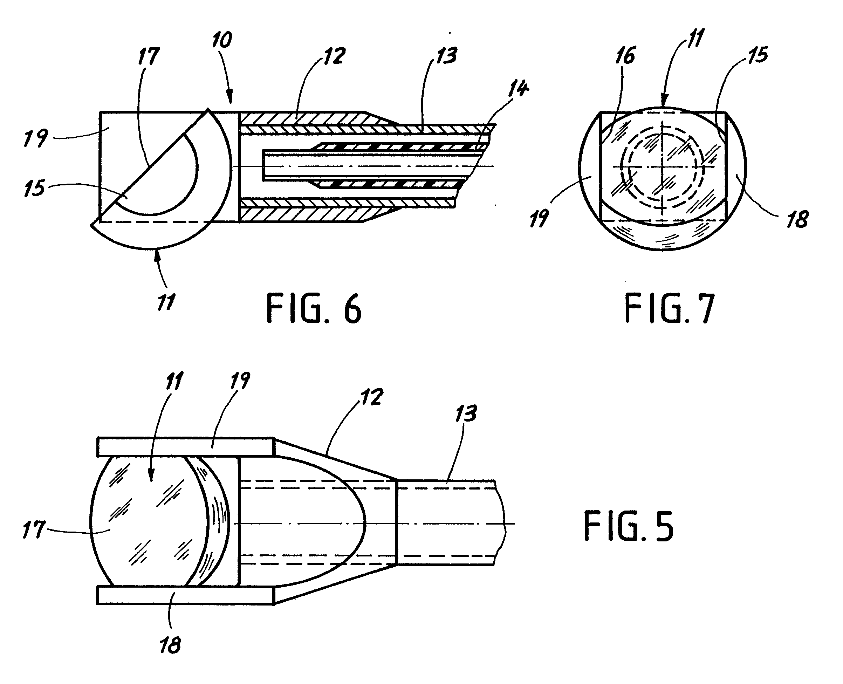

Les figures 5, 6 et 7 représentent une forme d'exécution préférée d'un dispositif catadioptrique selon l'invention dont le corps catadioptrique 11 est analogue au corps 7. Le dispositif est utilisable par exemple en endoscopie. Il comporte une monture 12 de forme cylindro-conique tronquée fixée sur un tube rigide 13 dans lequel est introduit un conducteur optique 14.

Le corps 11 est taillé en une forme hémisphérique dans une pièce de saphir et présente deux méplats parallèles 15 et 16 qui sont orientés perpendiculairement à la face plane 17 sur laquelle le faisceau lumineux conduit par le conducteur 14 se réfléchit.

La monture 12 comporte deux branches 18 et 19 ayant des faces intérieures planes et parallèles, écartées d'une distance qui correspond à l'écartement entre les méplats 15 et 16.

Le corps 11 peut être fixé, par exemple par un ciment, une colle, ou un mastic, entre les branches 18 et 19 de la monture 12, en donnant à la face plane 17 l'inclinaison désirée par rapport et l'axe du tube 13. On peut aussi ajuster à volonté la distance entre l'extrémité du conducteur 14 et le corps 11 et choisir ainsi les conditions de focalisation du faisceau.

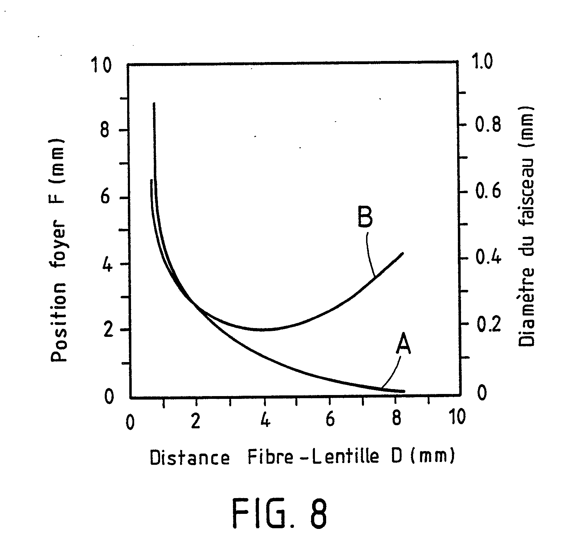

Revenant à la figure 4, on explique maintenant comment le choix de la distance entre l'extrémité 4 du conducteur 2 et le corps 7 permet de déterminer d'une part la distance de focalisation, c'est-à-dire la position du foyer de la zone 7c qui constitue le ménisque plan-convexe de sortie, et d'autre part le diamètre ∅ du faisceau au point de focalisation. Le graphique de la figure 8 reproduit ces courbes pour un corps 7 hémisphérique de saphir dont le diamètre est de 4mm et dont la face plane est orientée à 45° par rapport à l'axe du conducteur optique 2. Les courbes A et B donnent respectivement la position du plan-image 5 de focalisation par rapport au point d'intersection de l'axe a-b et de la surface de la zone 7c (distance F) et le diamètre ⌀ du faisceau focalisé. Comme on le voit, ces deux paramétres varient différemment en fonction de la distance (D) entre l'extrémité 4 du conducteur 2 et le point d'intersection de l'axe a-b et de la surface de la zone 7a, c'est-à-dire en fonction de la distance que le faisceau incident parcourt dans l'air, en divergeant, entre l'endroit où il sort de la fibre optique 2 et l'endroit où il pénètre dans le corps 7.

Pour une distance D de 4 mm on obtient un diamètre de focalisation ⌀ de 0,2 mm et le plan-image 5 se trouve à environ 1,3 mm de la surface de la zone 7c.

On a décrit plus haut un corps hémisphérique 7 de 4 mm ⌀. Cependant, le diamètre de ce corps pourrait être réduit jusqu'à 0,5 mm avec une fibre optique ayant elle-même un diamètre de coeur de 0,5 mm. On peut néanmoins utiliser toute sorte de fibres optiques ayant un coeur compris entre quelques microns et quelques milimètres. D'autre part, on peut aussi utiliser, comme conducteur optique, dans le cas où on choisit des dimensions supérieures à 0,5 mm pour le corps 7, un faisceau de fibres, ce qui permet de produire une image pour des applications endoscopiques.

Un autre avantage du dispositif selon l'invention est le fait que la position du corps 7 par rapport au conducteur optique 2 peut être ajustée facilement de cas en cas, grâce à une monture dont la réalisation représente aucune difficulté pour l'homme de l'art. On peut donc commander l'angle de déflexion, qui, avec un prisme dont la face réfléchissante a une structure de miroir, peut atteindre 180°. On peut aussi commander la refocalisation du faisceau en faisant varier la distance D.

## Revendications

1. Dispositif catadioptrique DC destiné à dévier un faisceau lumineux (3) et notamment un faisceau de haute énergie d'un angle prédéterminé le long d'un axe optique brisé (a-b), et à focaliser ce faisceau optique sur un plan-image (5) prédéterminé, ce dispositif comportant des moyens (7b) définissant une surface optique plane de réflexion totale (S₂) dont un point (c) coïncide avec le point d'inflexion dudit axe (a-b) et des moyens définissant des surfaces optiques convergentes de focalisation dudit faisceau, ces moyens comprenant au moins une partie (7c) placée sur ledit trajet optique, après ladite surface à réflexion totale (S₂), caractérisé en ce que ladite surface à réflexion totale (S₂) et la partie (7c) définissant une surface convergente (S₃) sont ménagées sur un corps (7) d'une seule pièce, réalisé en une matière optique.

2. Dispositif catadioptrique (DC) selon la revendication 1, dans lequel les moyens définissant des surfaces optiques convergentes de focalisation du faisceau comprenant une partie (7a) placée sur le trajet optique du faisceau avant la surface à réflexion totale (S₂), caractérisé en ce que ladite surface à réflexion totale (S₂) et les parties (7a, 7c) définissant les surfaces convergentes (S₁, S₃) sont ménagées sur un corps (7) d'une seule pièce, réalisé en une matière optique.

3. Dispositif catadioptrique selon la revendication 1 ou 2, caractérisé en ce que lesdites surfaces optiques convergentes (S₁, S₃) sont de forme sphérique.

4. Dispositif catadioptrique selon la revendication 1 ou 2, caractérisé en ce que chaque surface optique convergente est conique, ellipsoïdale, paraboloïdale ou hyperboloïdale.

5. Dispositif catadioptrique selon les revendications 2 et 3, caractérisé en ce que ledit corps (7) en une seule pièce présente une forme hémisphérique dont la surface extérieure sphérique forme lesdites surfaces convergentes (S₁, S₃) et dont la surface extérieure diamétrale forme ladite surface à réflexion totale (S₂).

6. Appareil médical pour l'observation et le traitement par de l'énergie lumineuse, caractérisé en ce qu'il comporte en combinaison un dispositif catadioptrique (11) suivant l'une quelconque des revendications 1 à 5 et une monture (12) dans laquelle est fixée l'extrémité d'au moins une fibre optique (14) dont est issu ledit faisceau lumineux, ladite monture étant agencée de manière que ladite extrémité soit placée en regard de l'une des surfaces convergentes.

FIG.1

FIG. 2

FIG. 3

FIG. 4

EP 0 362 767 A1

FIG. 6

FIG. 7

FIG. 5

EP 0 362 767 A1

FIG. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 918 072  (IMAI et al.)<br>* Figure 1; colonne 1, ligne 58 - colonne 2, ligne 10; revendications *<br>--- | 1,3,4,6 | G 02 B   23/24<br>A 61 B    1/00 |
| A | US-A-4 140 364  (N. YAMASHITA et al.)<br>* Figure 5; revendications *<br>--- | 1,6 | |
| A | EP-A-0 251 478  (BAXTER TRAVENOL LABORATORIES LTD)<br>* Figure 2; revendications *<br>--- | 1,6 | |
| A | GB-A-1 015 675  (GENERAL PRECISION INC.)<br>* Figures; revendications *<br>--- | 1,6 | |
| A | DE-A-3 029 799  (OLYMPUS OPTICAL CO. LTD.)<br>* Figures 1,2 *<br>--- | 1,3 | |
| A | FR-A-1 130 653  (R. WOLF)<br>* Figures *<br>----- | 1 | DOMAINES TECHNIQUES RECHERCHES (Int. Cl.5)<br><br>G 02 B   23/00<br>A 61 B    1/00 |

Le présent rapport a été établi pour toutes les revendications

| Lieu de la recherche | Date d'achèvement de la recherche | Examinateur |
|---|---|---|
| LA HAYE | 16-11-1989 | WESBY P.B. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...................................................................
& : membre de la même famille, document correspondant

EPO FORM 1503 03.82 (P0402)